# EUROPÄISCHE PATENTSCHRIFT

(11) **EP 0 786 631 B1**
(45) Veröffentlichungstag und Bekanntmachung des Hinweises auf die Patenterteilung: **18.10.2000**
(21) Anmeldenummer: 97100239.9
(22) Anmeldetag: 09.01.1997
(51) Int. Cl.: F24D 19/02

(54) **Vorrichtung zum Befestigen von Gegenständen, wie Heizkörpern, an einer Wand**
Device for mounting objects such as radiators against a wall
Dispositif pour monter des objets, comme des radiateurs, contre un mur

(30) Priorität: 26.01.1996 DE 29601329 U
(43) Veröffentlichungstag der Anmeldung: 30.07.1997
(73) Patentinhaber: Sigarth AB, 330 33 Hillerstorp (SE)
(72) Erfinder: Hageberg, Thorleif, S-330 33 Hillerstorp (SE)
(74) Vertreter: Müller, Hans-Jürgen, Dipl.-Ing.

(56) Entgegenhaltungen:
- DE-A- 4 109 070
- DE-A- 4 301 943
- DE-U- 8 903 907

## Beschreibung

Die Erfindung betrifft eine Vorrichtung zum Befestigen von Gegenständen, wie Heizkörpern, an einer Wand gemäß dem Oberbegriff des Anspruchs 1.

Es ist bereits eine Vorrichtung bekannt (DE-A-41 09 070), welche etwa dem Oberbegriff des Patentanspruchs 1 entspechende Bauteile aufweist. Dabei wird das Sperrorgan, das als hakenförmiger Bügel ausgebildet ist, mit einem verschiebbaren Organ verschraubt, das in die Sperrstellung an sägezahnförmigen Sperrnasen vorbeidrückbar ist, während es aus der Sperrstellung nur durch Lösen der Verbindungsschraube herauskommen kann. Es sind daher eine Anzahl unterschiedlicher Manipulationen zum Montieren und Demontieren erforderlich.

Ferner sind Vorrichtungen bekannt (DE-GM 89 03 907), bei denen das Abstützorgan am unteren Ende einen etwas vorstehenden Arm mit einer Aussparung aufweist, in welche der untere Rand des Heizkörpers einsetzbar ist. Mittels eines Befestigungsorgans ist das konsolartige Abstützorgan an der Wand befestigbar; dabei ist der Abstand zwischen dem Abstützorgan an der Wand durch ein Element einstellbar. Am oberen Ende des Abstützorgans ist das Sperrorgan befestigt, das mit einer vorstehenden Sperrnase den oberen Rand des Heizkörpers oder dessen Halteorgan übergreift, welches an der Rückseite des zu befestigenden Heizkörpers angebracht ist. Das Versperren des Gegenstands gegen ungewolltes Auslösen aus der Montagestellung wird durch eine Wendelfeder behindert, welche das Sperrorgan nach unten zieht, also dessen Sperrnase in Anlage an den oberen Rand des Heizkörpers oder Halteorgans drückt. Es hat sich jedoch gezeigt, daß diese Sperrvorrichtung jedenfalls dann Mängel aufweist, wenn die Wendelfeder nicht genügend stark dimensioniert ist. So kann das Sperrelement entgegen der Federwirkung etwas nach oben gedrückt werden, wenn eine Kraft auf den Heizkörper in Richtung nach oben angreift. Dabei kann schon eine relativ kleine Bewegungsstrecke genügen, um den Heizkörper aus seiner zwischen Abstützorgan und Sperrorgan verankerten Montagestellung herausdrücken, ohne daß dies sogleich wahrgenommen wird. Die gesamten Kräfte, welche zum Halten des üblicherweise mit Heizwasser gefüllten Heizkörpers aufzuwenden sind, müssen dann von dem das Heizwasser zu- und abführenden Rohrleitungen aufgenommen werden. Durch sich stark ändernde Temperaturen beim Aufheizen und Abkühlen ergeben sich erhebliche Spannungsunterschiede und daher Bewegungs- und Zerstörungsmöglichkeiten mit der Folge, daß das Heizungssystem insbesondere an der Verbindungsstelle zwischen Heizkörper und Heizleitungen leckt. Erhebliche Wasserschäden in den betreffenden Räumen sind dann die Folge. Besonders bei der Verwendung von Kunststoffrohren treten solche Nachteile häufig auf.

Der Erfindung liegt die Aufgabe zugrunde, die Vorrichtung auf einfache Weise dahingehend zu verbessern, daß sie nicht nur eine sicherere Absperrung gegen unbeabsichtigtes Lösen, insbesondere Abheben des Gegenstands, insbesondere Heizkörpers, aus der Montagestellung gewährleistet, sondern auch schnell und einfach ohne allzu viele Manipulationen, wie Anziehen von Schrauben, in die Sperrstellung bringbar ist.

Die Erfindung ist im Anspruch 1 gekennzeichnet und in Unteransprüchen sind bevorzugte Ausbildungen beansprucht. Darüber hinaus werden besondere Ausbildungen der Erfindung im folgenden vornehmlich anhand der Zeichnung näher erläutert.

Gemäß der Erfindung steht das Sperrorgan in der Sperrstellung unter Federbelastung und wird dadurch eine der Sperrnasen auf den oberen Rand des Gegenstands oder Halteorgan gedrückt. Dadurch wird dafür gesorgt, daß sich das Sperrorgan nicht ohne weiteres beispielsweise bei einem gewissen Druck auf den Heizkörper oder anderen Gegenstand von unten nach oben aus der Sperrstellung bewegt, wie dies beim Stand der Technik üblich ist, sofern das Sperrorgan nicht in die Sperrstellung festgeschraubt ist. Vielmehr sorgt insbesondere ein Federelement dafür, daß das Sperrorgan in der Sperrstellung, d.h. Montagestellung, verbleibt, sofern es nicht ganz bewußt aus dieser herausgelöst wird, um den Heizkörper oder anderen Gegenstand aus der Montagestellung zu befreien.

Bei einer Ausbildung der Erfindung, bei der eine Sperrnase in der Versperrstellung bzw. Montagestellung den oberen Rand des Gegenstands bzw. Halteorgans übergreift, sorgt ein zusätzliches Sperrelement insbesondere in Form eines Sperrzapfens dafür, daß das Sperrorgan in der betreffenden Stellung verbleibt, bis der Sperrzapfen durch eine andere Bewegung als die nach oben (zum Entsperren der Sperrnase) gerichtete aus ihrer gesperrten Position ausgerastet, d.h. entsperrt, wird. Hierzu empfiehlt es sich, wenn ein Entsperrzapfen oder anderes Entsperrelement insbesondere durch eine Bewegung im wesentlichen rechtwinklig auf die maßgebliche Entnahmerichtung des Gegenstands aus seiner Montagestellung, d.h. im wesentlichen rechtwinklig auf die zum Ausheben des Gegenstand aus seiner unteren Auflagerung gerichteten Richtung, zum Ausrasten des Sperrzapfens führt.

Eine einfache Ausbildung dieses Teils der Erfindung besteht darin, daß das Sperrorgan mit dem Abstützorgan ein Gelenk bildet, das von mindestens einem Gelenkzapfen am Sperrorgan und einer als Lager dienenden Aussparung im Abstützorgan, insbesondere einem abstehenden Schenkel desselben gebildet wird. Aus dem Bereich des Gelenks steht ein federelastischer Federarm des Sperrorgans ab. Dieser Federarm drückt in der Sperrstellung, wenn eine zahnartige Sperrnase einer Reihe von Sperrnasen den oberen Rand eines Halteelements den Gegenstand übergreift, das Sperrorgan in Richtung zu dem Halteelement, so daß eine bessere Sicherheit gegen unbeabsichtigtes Entsperren der Sperrnase und daher des Halteelements bzw. Gegenstands gewährleistet ist. Das Sperrorgan kann sich gegen die Federspannung um das Gelenk drehen und den oberen Rand des Gegenstands bzw. Halteelements freigeben, um den Gegenstand aus seiner Montagestellung bewußt herauszunehmen.

Bei einer anderen Ausbildung der Erfindung wird das Sperrelement im Abstützelement dadurch versperrt, daß mindestens ein, besser mehrere Sperrzähne des Sperrorgan durch entsprechende gegengerichtete Sperrzähne am Abstützelement in eine Sperrstellung eingreifen, um hierdurch das Bewegen des Sperrorgan in einer solchen Richtung zu verhindern, welche den Gegenstand bzw. das an diesem befestigte Halteorgan aus der betreffenden Montagestellung zwischen Abstütz- und Sperrorgan freigibt. Auch hier empfiehlt es sich, das Entsperren der Sperrnasen bzw. Sperrzähne dadurch zu besorgen, daß eine Kraft entgegen der Richtung auf die einander zugewandten und miteinander in Eingriff stehenden Zahnreihen wirkt, die im wesentlichen im rechten Winkel zu der Richtung verläuft, in welcher sich das Sperrorgan zum Abstützelement zum Entsperren, d.h. Entnehmen des Gegenstands aus der Montagestellung bewegen müßte.

Bei einer Ausbildung der Erfindung empfiehlt es sich, das Abstützelement unmittelbar an der Wand beispielweise durch eine Schraube zu befestigen. Hierbei ist es zweckmäßig, das Abstützelement im Querschnitt im wesentlichen U-förmig auszubilden, so daß der Mittel- bzw. Verbindungssteg an die Wand angedrückt werden kann und das Befestigungsorgan durch eine Durchbrechung in dem Steg hindurchgesteckt wird.

Bei einer anderen Ausbildung der Erfindung, die vor allem für eine zusätzlich zu der ersten Ausbildung verwendbare Befestigungsvorrichtung anwendbar ist, wird das Abstützorgan nicht an die Wand geschraubt, sondern legt sich insbesondere über ein den Abstand steuerndes Abstützelement, insbesondere eine Schraube, an der Wand ab. Bei dieser Ausbildung empfiehlt es sich, wenn sich die vom Mittel- bzw. Verbindungssteg abstehenden Seitenschenkel nach oben in Richtung zu dem erstgenannten Abstützorgan und dessen zugehörigen Sperrorgan erstrecken. Jeder Schenkel weist dann insbesondere innen je eine Reihe von Sperrzähnen bzw. Sperrnasen auf, die mit Sperrzähnen des Sperrelements zusammenwirken, das von oben auf diese Seitenschenkel des Abstützorgans auf- bzw. einsteckbar ist.

Die Erfindung wird nun anhand der Zeichnung anhand von Ausführungsbeispielen näher erläutert. Dabei zeigen:
- Fig. 1: Seitenansichten zweier erfindungsgemäßer Vorrichtungen in der Sperrstellung bzw. Montagestellung eines Heizkörpers an einer Wand;
- Fig. 2: ein erfindungsgemäßes Sperrorgan in Seitenansicht nach Fig. 2a und in Frontansicht in Fig. 2b;
- Fig. 3: ein erfindungsgemäßes Abstützelement in Seitenansicht nach Fig. 3a, in Frontansicht in Fig. 3b und in Draufsicht in Fig. 3c;
- Fig. 4: eine Seitenansicht auf ein mit dem Sperrorgan bestücktes Abstützorgan in der entspannten Lage und
- Fig. 5: zwei Ansichten auf eine andere Ausbildung der Erfindung.

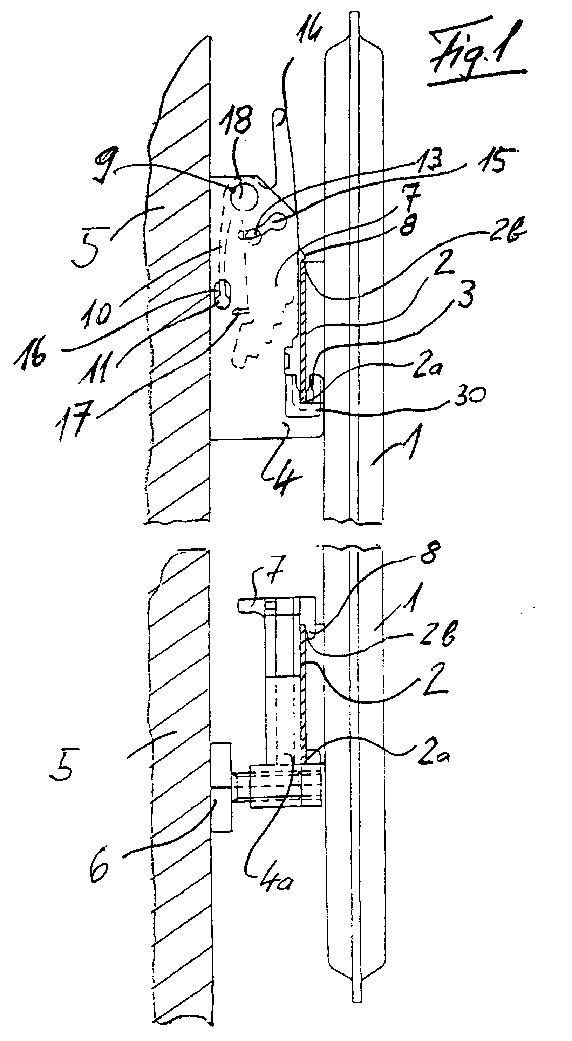

Gemäß Fig. 1 ist der als Flachheizkörper ausgebildete Gegenstand 1 an der Rückseite je mit einem laschenartigen Halteelement 2 versehen. Das obere Halteelement 2 ist mit dem unteren Rand 2a in eine Aussparung 3 des oberen Abstützorgans 4 eingesetzt, die sich nach oben öffnet, so daß das Halteelement 2 des Gegenstands 1 von oben in die Aussparung 3 eingeführt werden kann. Die Aussparung 3 wird in einem insb. aus Kunststoff bestehenden Einsatz 30 gebildet, der auf das Abstützelement 4 an den betreffenden Stellen aufgesteckt ist. Entsprechend ist der untere Rand 2a des unteren Halteorgans 2 auf eine Abstützfläche des unteren Abstützorgans 4a aufgesetzt. Während das obere Abstützorgan 4 an der Wand 5 angeschraubt ist, stützt sich das untere Abstützorgan 4a mittels eines als Schraube ausgebildeten Stützelements 6 an der Wand 5 ab. Auf das untere Abstützorgan 4a ist von oben ein der Wand 5 ab. Auf das untere Abstützorgan 4a ist von oben ein Sperrorgan 7 aufgesteckt und in die in Fig. 1 gezeigte Sperr- bzw. Montagestellung gebracht, in welcher die Sperrnase 8 den oberen Rand 2b des entsprechenden Halteorgans 2 übergreift. Im Innern des Sperrorgans 7 und des Abstützorgans 4 angeordnete zahnartige Sperrnasen sperren das Sperrorgan 7 am selbständigen Bewegen nach oben.

Am oberen Abstützorgan 4 ist ein Sperrorgan 7 schwenkbar um das Gelenk, das vom Gelenkzapfen 18 des Sperrorgans 7 einerseits und von der kreisförmigen und als Lagerung dienenden Aussparung 9 im Abstützorgan 4 gebildet ist. Darüber hinaus weist das Sperrorgan 7 einen gebogenen Federarm 10 mit einem Sperrzapfen 11 an seinem Ende sowie einem Führungszapfen 13 und einen Betätigungshebel 14 auf. Der Führungszapfen 13 rastet in eine kreisbogenförmige Aussparung 15 ein, während ein Zapfenkopf 12 des hakenförmigen Führungszapfens 13 den unteren Rand der Aussparung übergreift. Der Sperrzapfen 11 ist in eine Aussparung 16 im Abstützorgan 4 eingedrückt.

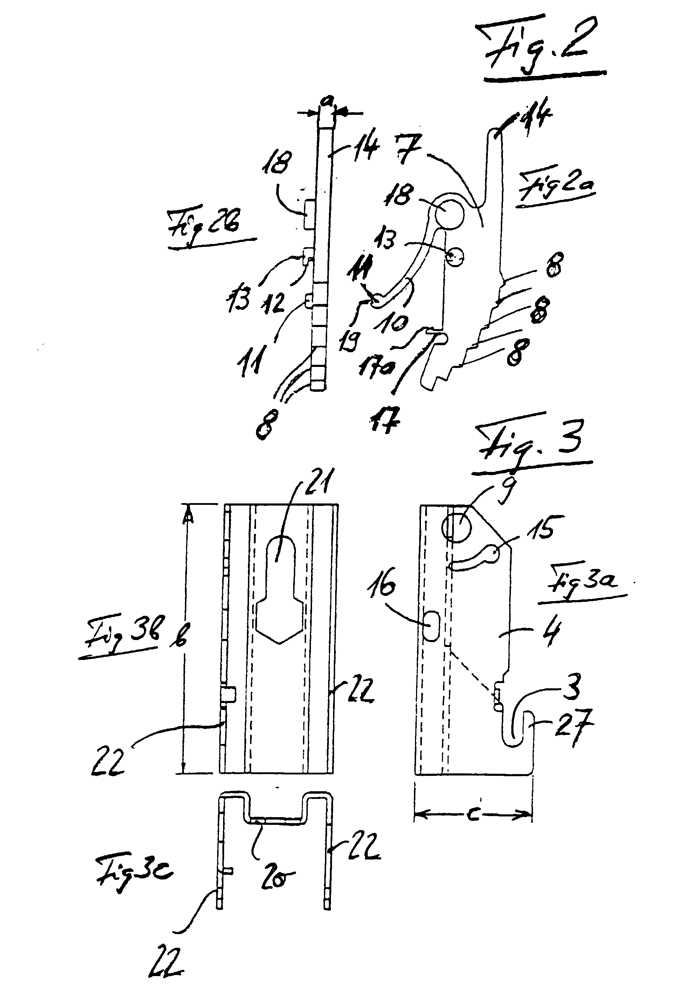

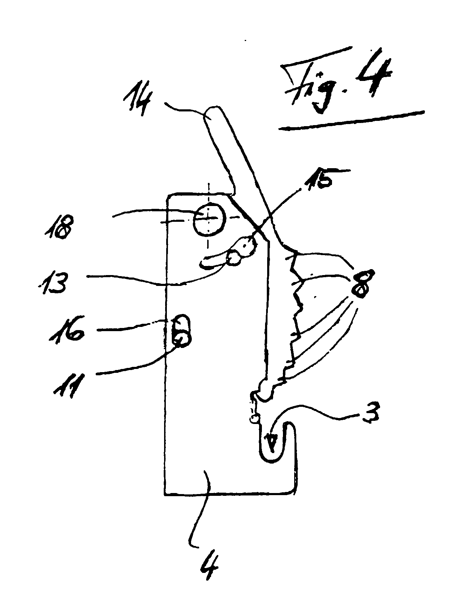

In Fig. 2 ist das Sperrorgan 7 in der Position dargestellt, in welcher der Federarm 10 sich in der entspannten Lage befindet. Hier wird deutlich, daß der federelastische Haltesteg 17 mit dem hochstehenden Hakenkopf 17a vor dem Sperrorgan 7 in Richtung zum Sperrzapfen 11 des Federarms 10 absteht. Am unteren gebogenen Rand befindet sich längs einer gebogenen Linie eine Reihe von zahnartigen Sperrnasen 8, die wahlweise zum Versperren des oberen Randes 2b des Halteorgans 2 je nach dessen Bauhöhe Anwendung finden können. Das Sperrorgan 7 besteht aus Kunststoff kann aber auch aus Metall bestehen. Aus Fig. 2b ist ersichtlich, daß der Gelenkzapfen 18, der Sperrzapfen 11 und der hakenförmige Führungszapfen 13 seitlich nach der gleichen Richtung abstehen. Das Sperrorgan 7 wird mit dem hakenförmigen Führungszapfen 13 in die bogenförmige Aussparung 15 im Bereich der breiten Stelle eingeführt und so weit verdreht, daß der Gelenkzapfen 18 in die Aussparung 9 im Abstützorgan 4 nach Fig. 3 eingreift. Das Sperrorgan 7 wird dann durch Druck auf den Betätigungshebel 14 so weit verschwenkt, bis der Sperrzapfen 11 in die Aussparung 16 des Abstützorgans 4 einrastet. Dies ist in Seitenansicht in Fig. 7 gezeigt. Dabei ist das Sperrorgan 7 in Bezug zum Abstützorgan 4 nicht vorgespannt, so daß alle sechs Sperrnasen 9 über den Seitenrand des Abstützorgans 4 überstehen und eine Sperraufgabe übernehmen können.

Das Abstützorgan 4 gemäß Fig. 3 kann gleichfalls aus Kunststoff, im übrigen aber auch aus gebogenem Blech bestehen. Der Verbindungssteg 20 weist eine Durchbrechung 21 zum Durchstecken eines Befestigungselements, wie einer Schraube, auf. Mindestens einer der Seitenschenkel 22 ist mit den Aussparungen 9, 15 und 16 sowie mit der sich nach oben öffnenden Aussparung 3 versehen. Der hochstehende Rand 27 verhindert das Abrutschen bzw. Herausrutschen des Halteelements 2 aus seiner Lage in der Aussparung 3.

Bei dem dargestellten Ausführungsbeispiel gelten folgende Abmessungen:
a = 4 mm
b = 75 mm
c = 33 mm

Bei der anderen Ausbildung der Vorrichtung weist das Sperrorgan 7 gemäß dem unteren Teil von Fig. 1 in der Mitte ein sich von unten nach oben erstreckendes Mittelteil auf, auf dessen Außenflächen sich längs einer geraden Linie erstreckende zahnförmige Sperrnasen befinden. Darüber hinaus befindet sich eine weitere Sperrnase 8 außerhalb des Mittelteils Diese Sperrnase 8 übergreift gemäß Fig. 1, unterer Teil, den oberen Rand 2b des Halteorgans 2.

Die Demontage des als Heizkörper dienenden Gegenstands 1 erfolgt beispielsweise dadurch, daß der Betätigungshebel 14, welcher sich im Zwischenraum zwischen dem Gegenstand 1 und der Wand 5 nach oben erstreckt, gegen den Gegenstand 1 gezogen wird, bis der Hakenkopf 17a des Haltestegs 17 in eine Kerbe 19 am Außenrand des Gelenkzapfens 11 einrastet und dann kein Teil des Sperrorgans 7 mehr über den Seitenrand des Abstützorgans 4 übersteht. Der obere Rand 2b des Halteelements 2 wird hierdurch freigegeben und die Sperrnase 8 beim Einschwenken hinter den Seitenrand des Abstützorgans 4 vom oberen Rand 2b des Halteelements 2 abgestreift.

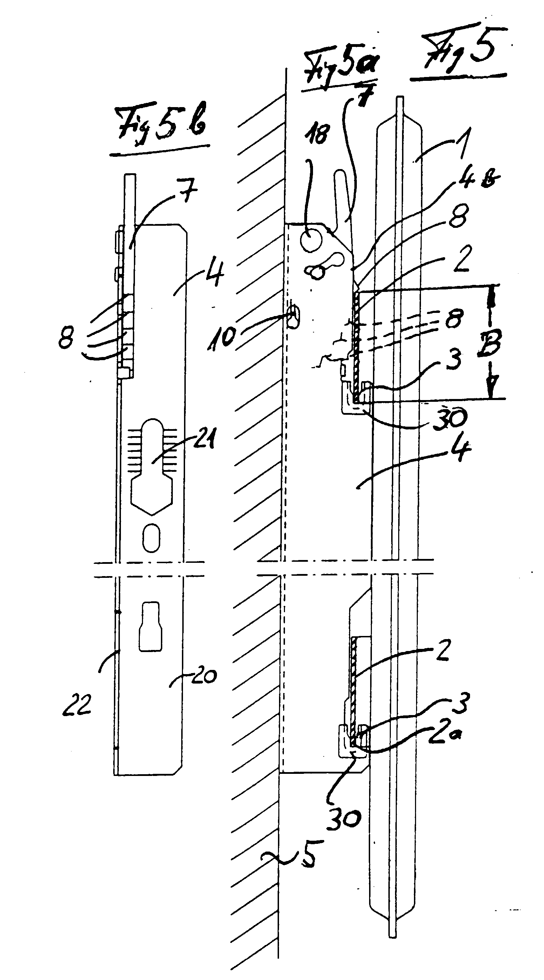

Durch Zurückdrücken des Betätigungshebels 14 in Richtung zur Wand 5 wird der Hakenkopf 17a wieder aus der Kerbe 19 ausgerastet und das Sperrorgan 7 verschwenkt nun durch die Kraft des Federarms 10 wieder in die in Fig. 4 gezeigte Stellung nach außen.

In Fig. 5 ist eine weitere Alternative der Erfindung schematisch beschrieben und zwar in Fig. 5a in Seitenansicht in der Sperr- bzw. Montagestellung des Heizkörpers an der Wand und in Fig. 5a in Aufsicht auf die Wand bei abgenommenen Heizkörper.

Bei dieser Ausbildung der Erfindung ist das Sperrorgan 7 zwar entsprechend Fig. 1 ausgebildet und am Abstützorgan 4 gelagert; das Abstützorgan 4 ist jedoch nach unten verlängert und als eine Art Befestigungsschiene oder Konsole ausgebildet, um gleichzeitig als unteres Abstützorgan zur Abstützung des unteren Rands 2a des unteren Halteorgans 2 des Heizkörpers 1 zu dienen. Mit anderen Worten: Das Sperrogan 7 bildet mit einem einzigen Abstützorgan 4 eine Baueinheit, die an der Wand befestigt sowohl zum Aufnehmen und Abstützen des unteren Halteorgans 2 als auch zum Abstützen und Aufnehmen des oberen Halteorgans 2 des gleichen Heizkörpers 1 dient. Bei Fig. 5b sind die Einsätze 30 nicht dargestellt.

Der besondere Vorteil der Erfindung besteht darin, daß auch bei dieser Anordnung, bei der der Abstand der unteren Aussparung 3 von der oberen Aussparung 3 des Abstützorgans 4 festgelegt ist, der Heizkörper 1 in der Sperrstellung bzw. Montagestellung gegen ungewolltes Bewegen nach oben unabhängig davon absperrbar ist, welche Bauhöhe B das obere Halteorgan 2 hat. Bei der Bauhöhe B gemäß Fig. 5a steht der obere Zahn der Sperrnasen 8 als Sperre gegen ein Nach-oben-Bewegen des Halteorgans 2 und Heizkörpers 1 im Wege. Ist dagegen die Bauhöhe B des Halteorgans 2 kleiner, dann kommt eine der darunter liegenden Sperrnasen 8 in Eingriff, die in Fig. 5a lediglich schematisch angedeutet sind, da sie in dieser Stellung hinter dem Seitenschenkel 22 des schienenartigen Abstützorgans 4 verborgen sind. Die gleichfalls in Fig. 5 verborgene und als Federarm 10 des Sperrorgans 7 ausgebildete Feder drückt die Reihe der Sperrnasen 8 soweit nach außen, bis das angelegte Halteelement 2 kein weiteres Nach-außen-Drücken ermöglicht. Aus diesem Grunde empfiehlt es sich auch, die Reihe der Sperrnasen 8 nicht in einer geraden, sondern in einer gebogenen bzw. gekrümmten Linie anzuordnen, damit untere Sperrnasen 8 nicht im Wege stehen, d.h. nicht über den Rand 4b des Abstützorgans 4, d.h. dessen Seitenschenkel 22 hinausstehen. Es ist erwünscht, daß jeweils nur derjenige Zahn der Sperrnasen 8 über diesen Rand 4a in Richtung zum Heizkörper 1 hinausragt, der zum Absperren je nach der Bauhöhe B des Halteorgans 2 zur Verfügung steht.

Die Form und Konfiguration der Sperrnasen 8 ist nicht auf die dargestellte Ausbildungsform beschränkt, selbst wenn diese zahlreiche Vorteile bietet. Auch kleine hakenförmige Elemente wären möglich, sofern diese das Einsetzen des Halteorgans 2 in die Montagestellung nicht erschweren oder sogar verhindern. Erwünscht ist, daß die Sperrnase 8 des Sperrorgans 7 automatisch über das Halteorgan 2 bzw. den Heizkörper 1 greift, wenn diese in Richtung gegen das Abstützorgan 4 und das Sperrorgan 7 in die Montagestellung gebracht werden.

## Patentansprüche

1. Vorrichtung zum Befestigen von Gegenständen (1), wie Heizkörpern, an einer Wand (5), mit einem Abstützorgan (4) zum Abstützen des Gegenstands (1) oder eines daran befestigten Halteorgans (2) von unten und mit einem Sperrorgan (7) zum Versperren des Gegenstands (1) bzw. Halteorgans (2) gegen Bewegungen aus der Abstütz-, Sperr- oder Montageposition auf dem Abstützorgan (4), bei der das Abstützorgan (4) an der Wand (5) abstützbar ist, während das Sperrorgan (7) mit dem Abstützorgan (4) zusammenwirkt,
**dadurch gekennzeichnet,**
daß das Sperrorgan (7) mit einer Reihe von zahnartigen Sperrnasen (8; 25) versehen ist, die sich auf einer gebogenen Linie befinden, und daß in der Sperrstellung eine der Sperrnasen (8) den oberen Rand (2b) des Gegenstands (1) bzw. Halteorgans (2) übergreift und unter Federkraft gegen diesen Rand (2b) drückbar ist.

2. Vorrichtung nach Anspruch 1,
**dadurch gekennzeichnet**,
daß das Sperrorgan (7) um ein Gelenk gegen die Wirkung einer Feder schwenkbar ist.

3. Vorrichtung nach Anspruch 2,
**dadurch gekennzeichnet**,
daß die Feder als federelastischer Federarm (19) ausgebildet ist, welcher vom Sperrorgan (7) absteht.

4. Vorrichtung nach Anspruch 3,
**dadurch gekennzeichnet**,
daß der Federarm (10) einen seitlichen Sperrzapfen (1) aufweist, der in einer Aussparung (16) des Abstützorgans (4) führbar ist.

5. Vorrichtung nach einem der vorhergehenden Ansprüche,
**dadurch gekennzeichnet,**
daß sich Sperrnasen (8; 25) reihenartig in einer geraden oder gebogenen Linie hintereinander erstrecken.

6. Vorrichtung nach einem der vorhergehenden Ansprüche,
**dadurch gekennzeichnet,**
daß das Sperrorgan (7) ein Kunststoff-Preß- bzw. Kunststoffspritzteil und mittels eines Gelenkzapfens (18) vom Abstützorgan (4) schwenkbar gelagert ist.

7. Vorrichtung nach einem der vorhergehenden Ansprüche,
**dadurch gekennzeichnet**,
daß das Abstützorgan (4) an die Wand (5) anschraubbar und/ oder abstützbar ist und eine sich nach oben öffnende Aussparung (3) zur Aufnahme des unteren Rands (2a) des Gegenstands (1) bzw. Halteorgans (2) aufweist.

8. Vorrichtung nach Anspruch 7,
**dadurch gekennzeichnet,**
daß das Abstützorgan (4) im Querschnitt etwa U-förmig ausgebildet ist.

9. Vorrichtung nach Anspruch 8,
**dadurch gekennzeichnet**,
daß die Seitenschenkel (22) des Abstützorgans (4) die Aussparung (3) sowie Durchbrechungen bzw. Aussparungen (9, 15, 16) für den Gelenkzapfen (18), den Sperrzapfen (11) und ggf. einen Führungszapfen (13) aufweisen, während der Verbindungssteg (20) eine Durchbrechung (21) für ein Befestigungsorgan bzw. ein Abstützelement (6) aufweist.

10. Vorrichtung nach Anspruch 8,
**dadurch gekennzeichnet**,
daß die Seitenschenkel (22) des Abstützorgans (4) an Innenflächen Sperrnasen (26) aufweisen, welche mit Sperrnasen (25) des Sperrorgans (7) zusammenwirken, und daß der Verbindungssteg (20) eine Durchbrechung (21) mit einem Innengewinde aufweist, in das ein Abstützelement (6) bzw. Befestigungsorgan einschraubbar ist.

11. Vorrichtung nach Anspruch 10,
**dadurch gekennzeichnet**,
daß das Sperrorgan (7) derart auf/in die Seitenschenkel (22) des Abstützorgans (4) auf-/einsteckbar ist, daß mindestens eine Sperrnase (8) des Sperrorgans (7) den oberen Rand (2b) des Gegenstands (1) bzw. Halteorgans (2) übergreift, während mindestens eine andere Sperrnase (25) desselben hinter eine Sperrnase (26) im Seitenschenkel (22) des Abstützorgans (4) verrastbar ist.

12. Vorrichtung nach einem der vorhergehenden Ansprüche,
**dadurch gekennzeichnet**,
daß das Sperrorgan (7) einen Betätigungshebel (14) aufweist, der vom Gelenkzapfen (18) in einer den Sperrnasen (8) abgewandten Richtung absteht.

13. Vorrichtung nach einem der vorhergehenden Ansprüche,
**dadurch gekennzeichnet**,
daß das Sperrorgan (7) an das Abstützorgan (4) angelenkt ist und eine Reihe von Sperrnasen (8) aufweist, die beim Verschwenken des Sperrorgans (7) um dessen Gelenk am Abstützorgan (4) über einen Rand (4a) desselben in Richtung zum Heizkörper (1) bzw. dessen Halteorgan (2) derart ausschwenkbar sind, daß eine der Sperrnasen (8) in der Sperr- bzw. Montagestellung (Fig. 1 und 7) den oberen Rand (2b) des Halteorgans (2) bzw. Heizkörpers (1) übergreift bzw. an diesem angreift,
und daß eine Feder die Reihe der Sperrnasen (8) in Richtung zum Heizkörper (1) bei dessen Halteorgan (2) vorspannt.

## Claims

1. Device for fixing objects (1) such as radiators to a wall (5), having a support member (4) for supporting from below the object (1) or a holder member (2) fixed to it, and having a locking member (7) for locking the object (1) or holder member (2) against movement on the support member (4) from out of the support or locking or fitted position, wherein the support member (4) can be supported from the wall (5) whilst the locking member (7) cooperates with the support member (4), characterised in that the locking member (7) is provided with a row of tooth like locking noses (8; 25) disposed along a curved line, and that in the locked setting one of the locking noses (8) engages over the edge (2b) of the object (1) or holder member (2) and can be pressed by spring force against this edge (2b).

2. Device according to claim 1, characterised in that the locking member (7) can be swivelled about a joint against the action of a spring.

3. Device according to claim 2, characterised in that the spring is formed as a spring elastic spring arm (19) which protrudes from the locking member (7).

4. Device according to claim 3, characterised in that the spring arm (10) has a side locking pin (1) which can be guided in a recess (16) of the support member (4).

5. Device according to one of the preceding claims, characterised in that locking noses (8; 25) extend behind each other in a row along a straight or curved line.

6. Device according to one of the preceding claims, characterised in that the locking member (7) is a plastics pressing or a plastics injection moulding and is swivellably carried by the support member (4) by means of a swivel pin (18).

7. Device according to one of the preceding claims, characterised in that the support member (4) can be screwed to and/or be supported by the wall (5) and has a recess (3), open to the top, to receive the lower edge (2a) of the object (1) or holder member (2).

8. Device according to claim 7, characterised in that the support member (4) is formed more or less U-shaped in cross section.

9. Device according to claim 8, characterised in that the side limbs (22) of the support member (4) have the recess (3) and also openings or recesses (9, 15, 16) for the swivel pin (18), the locking pin (11) and if appropriate for a guide pin (13), whilst the connecting web (20) has an opening (21) for a fixing member or a support element (6).

10. Device according to claim 8, characterised in that the side limbs (22) of the support member (4) have locking noses (26) on inner surfaces which cooperate with locking noses (25) of the locking member (7), and that the connecting web (20) has an opening (21) with an inner thread into which can be screwed a support element (6) or fixing member.

11. Device according to claim 10, characterised in that the locking member (7) can be plugged onto or into the side limbs (22) of the support member (4) such that at least one locking nose (8) of the locking member (7) engages over the upper edge (2b) of the object (1) or holder member (2), whilst at least one other locking nose (25) thereof can latch behind a locking nose (26) in the side limb (22) of the support member (4).

12. Device according to one of the preceding claims, characterised in that the locking member (7) has an operating lever (14) which protrudes from the swivel pin (18) in a direction away from the locking noses (8).

13. Device according to one of the preceding claims, characterised in that the locking member (7) swivels on the support member (4) and has a row of locking noses (8), which, during swivelling of the locking member (7) about its joint on the support member (4), can be swivelled outwards over an edge (4a) of the latter in the direction towards the radiator (1) or its holder member (2), such that one of the locking noses (8), when in the locked or fitted setting (Figs. 1 and 7) engages over or engages the upper edge (2b) of the holder member (2) or radiator (1), and that a spring pre-loads the row of locking noses (8) in the direction towards the radiator (1) at its holder member (2).

## Revendications

1. Dispositif de fixation d'objets (1), tels que des corps chauffants, à une paroi (5), comportant un élément d'appui (4) destiné à soutenir, à partir du bas, l'objet (1) ou un élément de support (2) fixé sur celui-ci et comportant un élément de blocage (7) pour bloquer l'objet (1) ou l'élément de support (2) contre des déplacements à partir de la position d'appui, de blocage ou de montage sur l'élément d'appui (4), dans lequel l'élément d'appui (4) peut être soutenu sur la paroi (5), tandis que l'élément de blocage (7) coopère avec l'élément d'appui (4), caractérisé en ce que l'élément de blocage (7) est pourvu d'une série d'ergots de blocage (8 ; 25) du type dent, qui se trouvent sur une ligne arquée, et en ce que dans la position de blocage, l'un des ergots de blocage (8) passe sur le bord supérieur (2b) de l'objet (1) ou de l'élément de support (2) et peut être pressé contre ce bord (2b) sous l'effet d'un ressort.

2. Dispositif selon la revendication 1, caractérisé en ce que l'élément de blocage (7) peut pivoter autour d'une articulation, à l'encontre de l'effet d'un ressort.

3. Dispositif selon la revendication 2, caractérisé en ce que le ressort est réalisé en tant que bras de ressort (19) élastique qui dépasse de l'élément de blocage (7).

4. Dispositif selon la revendication 3, caractérisé en ce que le bras de ressort (10) présente un tenon de blocage (1) latéral qui peut être guidé dans une découpe (16) de l'élément d'appui (4).

5. Dispositif selon l'une des revendications précédentes, caractérisé en ce que des ergots de blocage (8 ; 25) s'étendent l'un derrière l'autre à la manière d'une rangée, en une ligne droite ou courbée.

6. Dispositif selon l'une des revendications précédentes, caractérisé en ce que l'élément de blocage (7) est un élément en matière plastique moulé sous pression ou un élément en matière plastique moulé par injection et est monté pivotant au moyen d'un axe d'articulation (18) de l'élément d'appui (4).

7. Dispositif selon l'une des revendications précédentes,, caractérisé en ce que l'élément d'appui (4) peut être vissé et/ou soutenu sur la paroi (5) et présente une découpe (3), s'ouvrant vers le haut, destinée à recevoir le bord inférieur (2a) de l'objet (1) ou de l'élément de support (2).

8. Dispositif selon la revendication 7, caractérisé en ce que l'élément d'appui (4) est réalisé avec une section transversale à peu près en U.

9. Dispositif selon la revendication 8, caractérisé en ce que les branches latérales (22) de l'élément d'appui (4) présentent la découpe (3) ainsi que des ajours ou des découpes (9, 15, 16) pour l'axe d'articulation (18), le tenon de blocage (11) et éventuellement un tenon de guidage (13), tandis que l'entretoise de liaison (20) présente un ajour (21) pour un élément de fixation ou un élément d'appui (6).

10. Dispositif selon la revendication 8, caractérisé en ce que les branches latérales (22) de l'élément d'appui (4) présentent, sur des surfaces intérieures, des ergots de blocage (26) qui coopèrent avec des ergots de blocage (25) de l'élément de blocage (7) et en ce que l'entretoise de liaison (20) présente un ajour (21) avec un taraudage dans lequel peut être vissé un élément d'appui (6) ou un élément de fixation.

11. Dispositif selon la revendication 10, caractérisé en ce que l'élément de blocage (7) peut être emboîté/enfiché sur/dans les branches latérales (22) de l'élément d'appui (4), de manière qu'au moins un ergot de blocage (8) de l'élément de blocage (7) passe sur le bord supérieur (2b) de l'objet (1) ou de l'élément de support (2), tandis qu'au moins un autre ergot de blocage (25) de ce même élément de blocage peut s'accrocher derrière un ergot de blocage (26) dans la branche latérale (22) de l'élément d'appui (4).

12. Dispositif selon l'une des revendications précédentes, caractérisé en ce que l'élément de blocage (7) comporte un levier d'actionnement (14) qui dépasse de l'axe d'articulation (18) dans un sens opposé aux ergots de blocage(8).

13. Dispositif selon l'une des revendications précédentes, caractérisé en ce que l'élément de blocage (7) s'articule sur l'élément d'appui (4) et présente une rangée d'ergots de blocage (8) qui, lorsque l'élément de blocage (7) pivote autour de son articulation sur l'élément d'appui (4), peuvent pivoter sur un bord (4a) de cet élément d'appui, en direction du corps chauffant (1) ou de son élément de support (2), de manière que l'un des ergots de blocage (8) passe sur le bord supérieur (2b) de l'élément de support (2) ou du corps chauffant (1) ou agit sur celui-ci, dans la position de blocage ou position de montage (fig. 1 et 7), et en ce qu'un ressort précontraint la rangée d'ergots de blocage (8) en direction du corps chauffant (1) ou de son élément de support (2).
